# EUROPEAN PATENT APPLICATION

(11) **EP 3 739 664 A1**
(43) Date of publication of application: **18.11.2020**
(21) Application number: 19174418.4
(22) Date of filing: 14.05.2019
(51) Int. Cl.: H01M 2/12, F16K 15/14

(54) **SAFETY VALVE FOR ELECTROCHEMICAL DEVICE CASINGS**

(71) Applicant: Nitto Belgium NV, 3600 Genk (BE)
(72) Inventor: The designation of the inventor has not yet been filed
(74) Representative: Grünecker Patent- und Rechtsanwälte PartG mbB

(57) **Abstract**

The present invention relates to a safety valve which may be produced in a simple manner and effectively provides emergency degassing when mounted on electrochemical device housings, the safety valve comprising: a housing defining a cavity and having a top and a bottom portion, the surface of the bottom portion covering an opening in the electrochemical device casing, and at least one protective degassing element provided on the bottom portion and configured to provide a gas through-opening when an internal pressure and/or temperature in the electrochemical device casing exceeds a predetermined threshold; wherein the material thickness of the protective degassing element is smaller than that of the remaining bottom portion. Further disclosed are kits comprising said safety valve and related electrochemical devices.

## Description

### FIELD OF INVENTION

The invention relates to safety valves for use in casings of electrochemical devices such as battery packs or fuel cells, for example. In addition, the present invention relates to kits for compensating an internal pressure in an electrochemical device casing, and to electrochemical devices comprising said safety valve.

### BACKGROUND OF THE INVENTION

Many electrochemical devices require a casing equipped with a safety mechanism which is capable of compensating fluctuations in the internal pressure within the casing to suppress bulging or deformation by continuous air exchange with the environment and/or which is capable of emergency degassing if the pressure or temperature is excessively increased. The latter function is especially important for batteries (such as lithium ion batteries used in automotive applications, for example) or other electrochemical devices prone to thermal runaway phenomena, wherein the device heats up sharply due to the occurrence of a variety of exothermic reactions, catches fire and may even burst or explode (due to excessive internal pressure caused by gas release, for example). These effects are further pronounced in battery packs, wherein the thermal runaway of a single cell may promote damage, thermal runaway and/or malfunction of neighboring cells.

It is known to provide electrochemical device housings with pressure compensation devices, which comprise membranes or films having a certain gas permeability to enable continuous air exchange but also protect the interior of the housing from penetrating dirt and water. For example, US 2013/0032219 A1 discloses a device using a gas-permeable membrane, typically composed of porous PTFE, which at least partly opens a gas-through opening for bursting protection, thereby combining continuous pressure compensation and emergency degassing in a single unit. However, said configuration is disadvantageous since after an abrupt pressure increase, the membrane is destroyed and must be replaced to perform both functions. US 2018/0292020 A1 addresses this problem by using a nonwoven fabric material as gas-permeable membrane to increase its air permeability, while using separate sealing lips which lift off the sealing surface if the internal pressure reaches a critical threshold (i.e. during emergency degassing). However, the method of producing said pressure compensation device is elaborate since it is difficult to provide sealing lips with a geometry which both conforms to the casing and lift off at a predetermined pressure. In addition, the membrane must be specifically treated to prevent liquids (e.g. water, oil) and dirt from penetrating from outside, for example by laminating a suberabsorbent nonvowen fabric layer to a microfiber-nonvoven fabric layer. Furthermore, the use of a superabsorbent layer tends to decrease the gas permeation properties over time and must be replaced once the liquid absorption capacity has been reached. WO 2018/183804 A1 discloses a vent assembly comprising an umbrella valve for emergency degassing.

However, it still remains desirable to provide a simple safety valve which overcomes the above disadvantages and which may be produced inexpensively and in a straightforward manner.

### SUMMARY OF THE INVENTION

The present invention solves these objects with the subject matter of the claims as defined herein. Further advantages of the present invention will be further explained in detail in the section below.

In general, the present invention relates to a safety valve for an electrochemical device casing, comprising: a housing defining a cavity and having a top and a bottom portion, the surface of the bottom portion covering an opening in the electrochemical device casing, and at least one protective degassing element provided on the bottom portion and configured to provide a gas through-opening when an internal pressure and/or temperature in the electrochemical device casing exceeds a predetermined threshold; wherein the material thickness of the protective degassing element is smaller than that of the remaining bottom portion.

In another aspect, the present invention provides a kit for compensating an internal pressure in an electrochemical device casing, comprising, separately, the aforementioned safety valve, and a pressure compensation element comprising a gas-permeable membrane, configured and arranged in such a way that internal pressure fluctuations within the electrochemical device casing are compensated.

Other aspects of the present invention relate to the use of the aforementioned safety valve or kit according for compensating an internal pressure in an electrochemical device casing, and to electrochemical devices comprising a casing, onto which said safety valve or said kit is mounted.

Preferred embodiments of, as well as other aspects of the present invention are described in the following description and the claims.

### BRIEF DESCRIPTION OF THE DRAWING

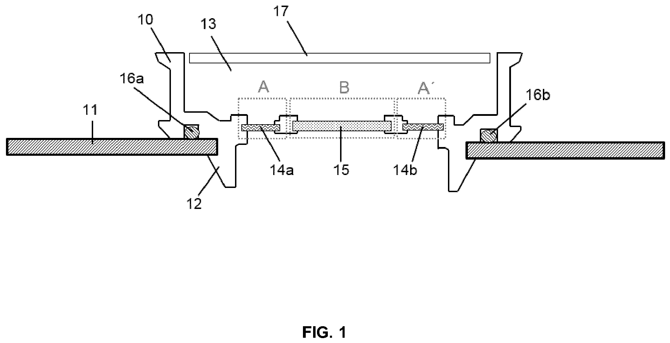

FIG. 1 schematically illustrates an exemplary safety valve in accordance to an embodiment of the present invention.

### DETAILED DESCRIPTION OF THE INVENTION

For a more complete understanding of the present invention, reference is now made to the following description of the illustrative embodiments thereof:

### Safety valves and kits for pressure compensation in electrochemical device casings

In a first embodiment, the present invention relates to a safety valve for an electrochemical device casing, comprising: a housing defining a cavity and having a top and a bottom portion, the surface of the bottom portion covering an opening in the electrochemical device casing, and at least one protective degassing element provided on the bottom portion and configured to provide a gas through-opening when an internal pressure and/or temperature in the electrochemical device casing exceeds a predetermined threshold; wherein the material thickness of the protective degassing element is smaller than that of the remaining bottom portion.

The safety valve housing can be constructed of a variety of different materials and combinations (including plastics, composites and metals, for example), but is typically formed of molded plastic.

The protective degassing element is generally configured to reversibly or irreversibly provide a gas through-opening when an internal pressure in the electrochemical device casing exceeds a predetermined threshold and thus enables emergency degassing.

In principle, the same material as that used for the safety valve housing may be employed to form the protective degassing element, which remarkably simplifies its manufacturing method. By setting the thickness very small compared to that of the remaining bottom portion, the material may be configured to break at a high internal pressure and thereby provide the gas-through opening.

Generally, it is preferred that the thin portion constituting the protective degassing element comprises a gas-impermeable material in order to only perform emergency degassing without compensating for minor internal pressure fluctuations within the housing.

In a further preferred embodiment, the protective degassing element comprises an elastomeric material, preferably a thermoplastic elastomer selected from styrenic block copolymers (TPS), thermoplastic polyolefinelastomers (TPO), thermoplastic vulcanizates (TPV), thermoplastic polyurethanes (TPU), thermoplastic copolyesters (TPC), and thermoplastic polyamides (TPA), of which thermoplastic elastomer compositions comprising thermoplastic vulcanizates are particularly preferred.

The protective degassing element is preferably formed by a sheet-like material, which is simpler to produce compared to complex geometries used in prior art (including, for example, umbrella valves).

It may be further preferable that the sheet-like material is supported by a carrier element in the bottom portion of the housing. Such a carrier element may be a clamping mechanism or a groove structure in the bottom portion, into which the sheet-like material is set, and from which the sheet-like material is released (by bursting or exiting the groove, for example) when internal pressure in the electrochemical device casing exceeds a predetermined threshold.

Alternatively, the sheet-like material may be adhered to the bottom portion via an adhesive layer formed at the perimeter of an opening in the bottom portion, e.g. on the lower side (facing the inside of the electrochemical device casing) of the bottom portion, but preferably on the upper side (facing the cavity of the safety valve) of the bottom portion. In further preferred embodiments, the adhesive layer is preferably configured to debond when the predetermined threshold of the internal pressure and/or temperature is achieved, thereby forming a gas through-opening. A pressure-triggered debonding function may be achieved by suitably adjusting the peel strength of the adhesive layer, for example, by appropriately selecting the peel strength of the adhesive layer material in dependence of the adhesive layer area and the materials used for the electrochemical device casing and the safety valve housing (i.e. the bottom part of the safety valve housing). Temperature-triggered debonding may be achieved by selecting the adhesive layer material from debond-on-command adhesives known in the art. Examples thereof include, but are not limited to adhesives comprising thermally expandable agents (e.g. physical foaming agents including, but not limited to alkanes; chemical foaming agents, etc.), chemical degrading agents, release-on-demand adhesive systems based on microcapsules and/or microspheres, adhesives with thermally modifiable crosslinks (e.g. adhesives capable of thermally reversible Diels-Alder crosslinking or the like), and combinations thereof.

In general, it may be preferred that the predetermined threshold of the internal pressure is in the range of from 1 to 100 kPa, further preferably from 2 to 50 kPa, especially preferably from 5 to 30 kPa. The predetermined threshold of the internal temperature is preferably in the range of from 100 to 450°C, further preferably from 200 to 430°C, especially preferably from 300 to 400°C.

The safety valve according to the present invention may further comprise a fixation means for safely mounting the valve onto an opening in the electrochemical device casing. While not being limited thereto (as long as the fixation means is capable of withstanding internal pressures higher than the predetermined threshold), said fixation means may include mechanical fixation means (e.g. clip- or screw-type, female (or male) connector fitted to a male (or female) connector provided in the electrochemical device casing, bayonet connector) or chemical fixation means (e.g., by coupling the safety valve to the electrochemical device casing through adhesives).

In another preferred embodiment, the safety valve may include a seal element configured to create a gas- and liquid-tight seal between the safety valve and the electrochemical device casing. The material used for the seal element is not particularly limited and may be selected from sealing materials known in the art, including rubber materials (e.g. silicone rubber, EPDM rubber, nitrile butadiene rubber) and the like, which may be mounted to the safety valve as sealing ring (e.g. O-ring) or by molding (e.g. injection molding), for example.

In a preferred embodiment, the safety valve for an electrochemical device casing according to the present invention further comprises a gas-permeable membrane at the bottom surface of the housing which is configured to compensate for minor internal pressure fluctuations within the electrochemical device casing, preferably throughout the entire lifetime of the safety valve. The gas-permeable membrane is preferably composed of a porous polymer material, further preferably a fluoropolymer material, especially preferably porous polytetrafluoroethylene (PTFE). Suitable commercially available materials include, but are not limited to, stretched porous PTFE membranes from the TEMISH™ range, available from Nitto Denko Corporation. The gas-permeable membrane may be mounted to the bottom portion of the safety valve by the same means as described above for the protective degassing element, including carrier elements or adhesives.

The safety valve may further comprise as a top portion a removable top cover comprised of the same or different materials as the bottom portion bearing the protective degassing element and the optional gas-permeable membrane. The main function of the top cover is to prevent the protective degassing element and the optional gas-permeable membrane from being damaged through mechanical and/or chemical impact from the outside of the electrochemical device housing, and to prevent damage of the environment of the electrochemical housing in the event of material bursting from the protective degassing element during emergency degassing.

The safety valve preferably further comprises one or more vent holes configured to provide fluid communication between the environment and the safety valve cavity and to thereby enhance air-exchange. In further preferred embodiments, the one or more vent holes are located at the sides of the safety valve and/or formed by one or more gaps between the top cover and the remaining portion of the safety valve.

In embodiments, the safety valve may be equipped with a control system comprising an inline camera, an airflow sensor and/or a temperature sensor providing information on the conditions (e.g. pressure and/or temperature) in the electrochemical device casing and/or the safety valve cavity, depending on the position in which it is mounted, and identifying peaks or anomalies in the pressure and/or temperature conditions. In such a case, it may be preferable to adhere the sheet-like material to the bottom portion of the safety valve using an adhesive capable of debonding on command by applying electrical voltage, which - when combined with a current source in contact with the adhesive layer, advantageously allows formation of gas-through openings at an early stage and may prevent burst events leading to potential damage. Examples of such adhesives include those disclosed in US 6,620,308 B2 or WO 2007/018239 A1, for example.

A non-limiting example according to the present invention is illustrated in Fig. 1, which shows a safety valve (10) mounted over an opening of an electrochemical device casing (11) by using a clip-type mechanism as fixation means (12). At the bottom portion of the safety valve (10), protective degassing elements (14a, 14b) are provided for emergency degassing purposes, which are constituted of thin, sheet-like material placed in openings of the bottom portion, held in place by a groove structure in the bottom portion of the safety valve, and which are configured to provide a gas through-opening when an internal pressure and/or temperature in the electrochemical device casing (11) exceeds a predetermined threshold, thereby providing bursting trigger portions (A, A'). The safety valve (10) further comprises seal elements (16a, 16b), which may be a O-ring seal, for example, if the casing opening and the safety valve have a circular shape when viewed from the top. A protective top cover (17) is provided as the top portion of the safety valve (10), thus forming a cavity (13). The safety valve according to Fig. 1 further comprises a pressure compensation portion (B) formed by a gas-permeable membrane (15), which is configured to balance minor pressure differences between the inside of the electrochemical device casing (11) and the environment.

As set out above, the safety valve illustrated in Fig. 1 combines an emergency degassing function (by means of the bursting trigger portions (A, A')) with pressure compensation between the environment and the inside of the electrochemical device casing (by the gas-permeable membrane constituting the pressure compensation element (B)).

However, as a second embodiment, the present invention may also comprise a kit for compensating an internal pressure in an electrochemical device casing, comprising separately: a safety valve according to the first embodiment described above (with our without a gas-permeable membrane), and a pressure compensation element comprising a gas-permeable membrane, configured and arranged in such a way that internal pressure fluctuations within the electrochemical device casing are compensated. By providing the pressure compensation and emergency degassing functions in separate devices, irreversibly damaged protective degassing elements (e.g. burst triggers) in the safety valve or the entire safety valve may be replaced without necessitating a replacement of the pressure compensation element. In addition, potential damages to the gas-permeable membrane due to bursting events may be avoided.

In a preferred embodiment, said pressure compensation element may be constituted in accordance to the safety valve described above as the first embodiment, with the exception that it comprises the gas-permeable membrane instead of the protective degassing element as essential feature.

As will be apparent to the skilled artisan, the safety valves and kits according to the present invention advantageously do involve sophisticated part geometries and may be therefore produced in a particularly simple and inexpensive manner.

### Uses of the Safety Valves and Kits and Electrochemical Devices

In a third embodiment, the present invention relates to an electrochemical device comprising a casing, onto which a safety valve according to the first embodiment or a kit according to the second embodiment is mounted.

The most effective use of safety valves and kits according to the present invention is made in combination with electrochemical devices prone to sudden pressure and/or temperature increase. Therefore, the electrochemical device is preferably a device prone to thermal runaway phenomena, such as a battery (including, but not limited to a lithium-ion battery) or a fuel cell, and especially preferably a stack of batteries or fuel cells provided in a casing, onto which a safety valve according to the first embodiment or a kit according to the second embodiment is mounted. Such battery and fuel cell stacks may be employed in automotive applications, for example.

In a fourth embodiment, the present invention relates to the use of a safety valve according to the first embodiment or a kit according to the second embodiment for compensating an internal pressure in an electrochemical device according to the third embodiment.

It will be understood that the preferred features of the first to fourth embodiments may be freely combined in any combination, except for combinations where at least some of the features are mutually exclusive.

Once given the above disclosure, many other features, modifications, and improvements will become apparent to the skilled artisan.

### REFERENCE NUMERALS

- 10: Safety valve
- 11: Electrochemical device casing
- 12: Fixation means
- 13: Cavity
- 14a, 14b: Protective degassing elements
- 15: Gas-permeable membrane
- 16a, 16b: Seal element
- 17: Top cover
- A, A': Bursting trigger portions
- B: Pressure compensation portion

## Claims

1. Safety valve for an electrochemical device casing, comprising:
a housing defining a cavity and having a top and a bottom portion, the surface of the bottom portion covering an opening in the electrochemical device casing, and
at least one protective degassing element provided on the bottom portion and configured to provide a gas through-opening when an internal pressure and/or temperature in the electrochemical device casing exceeds a predetermined threshold;
wherein the material thickness of the protective degassing element is smaller than that of the remaining bottom portion.

2. The safety valve for an electrochemical device casing according to claim 1, wherein the protective degassing element comprises a gas-impermeable material.

3. The safety valve for an electrochemical device casing according to any of claims 1 or 2, wherein the protective degassing element comprises an elastomeric material, preferably a thermoplastic elastomer.

4. The safety valve for an electrochemical device casing according to any of claims 1 to 3, wherein the protective degassing element is formed by a sheet-like material.

5. The safety valve for an electrochemical device casing according to claim 4, wherein the sheet-like material is supported by a carrier element in the bottom portion of the housing.

6. The safety valve for an electrochemical device casing according to claim 5, wherein the carrier element is a clamping mechanism or a groove structure in the bottom portion.

7. The safety valve for an electrochemical device casing according to any of claims 1 to 6, wherein the predetermined threshold of the internal pressure is in the range of from 5 to 30 kPa and/or the predetermined threshold of the internal temperature is in the range of from 300 to 400°C.

8. The safety valve for an electrochemical device casing according to any of claims 1 to 7, further comprising a fixation means for mounting the safety valve onto an opening in the electrochemical device casing and/or a seal element for sealing between the safety valve and the electrochemical device casing.

9. The safety valve for an electrochemical device casing according to any of claims 1 to 8, wherein the bottom surface of the housing further comprises a gas-permeable membrane.

10. The safety valve for an electrochemical device casing according to claim 9, wherein the gas-permeable membrane comprises a porous fluoropolymer material, preferably porous polytetrafluoroethylene (PTFE).

11. A kit for compensating an internal pressure in an electrochemical device casing, comprising separately:
a safety valve according to any of claims 1 to 8, and
a pressure compensation element comprising a gas-permeable membrane, configured and arranged in such a way that internal pressure fluctuations within the electrochemical device casing are compensated.

12. Use of a safety valve according to claims 1 to 10 or a kit according to claim 11 for compensating an internal pressure in an electrochemical device casing.

13. Use according to claim 12, wherein the electrochemical device is a battery or a fuel cell.

14. Electrochemical device comprising a casing, onto which a safety valve according to claims 1 to 10 or a kit according to claim 11 is mounted.

15. Electrochemical device according to claim 14, wherein the electrochemical device is a battery or a fuel cell.
